# EUROPÄISCHE PATENTSCHRIFT

(11) **EP 2 908 039 B1**
(45) Veröffentlichungstag und Bekanntmachung des Hinweises auf die Patenterteilung: **09.03.2016**
(21) Anmeldenummer: 14197890.8
(22) Anmeldetag: 15.12.2014
(51) Int. Cl.: F16L 3/137, F16L 3/14, H02G 3/32

(54) **BEFESTIGUNGSSYSTEM**
FASTENING SYSTEM
SYSTÈME DE FIXATION

(30) Priorität: 12.02.2014 DE 102014101745
(43) Veröffentlichungstag der Anmeldung: 19.08.2015
(73) Patentinhaber: HEBOTEC GmbH, 72116 Mössingen (DE)
(72) Erfinder: Böhringer, Markus, 72116 Mössingen (DE); Hermann, Gerold, 72108 Rottenburg-Obernau (DE)
(74) Vertreter: Kohler Schmid Möbus Patentanwälte

(56) Entgegenhaltungen:
- EP-A1- 2 112 413
- EP-B1- 1 646 818
- WO-A1-2014/151466
- DE-A1- 19 852 307
- DE-A1-102012 214 211
- JP-A- 2003 134 648
- JP-A- 2006 064 021

## Beschreibung

Die Erfindung betrifft ein Befestigungssystem zur lösbaren Befestigung von Kabeln, Rohren oder anderen länglichen Gegenständen an einem Untergrund oder einem Bauteil mit einem an dem Untergrund oder Bauteil befestigbaren Sockel, der mit einer Auflage für den mindestens einen Gegenstand versehen ist, und mit einem an dem Sockel lösbar befestigbaren und um den oder die auf der Auflage aufliegenden Gegenstände schlingbaren Klettverschlussband.

Ein solches Befestigungssystem ist aus der EP 1 646 818 B1 bereits bekannt. Ein Ende des Klettverschlussbandes ist bei diesem Befestigungssystem mit dem Sockel bevorzugt fest oder mittels Schrauben wieder lösbar verbunden. Die Gegenstände werden auf den Sockel gelegt. Anschließend wird das Band über die Gegenstände gelegt und durch einen Schlitz am gegenüberliegenden Ende des Sockels geführt und dann das Bandende durch Umschlagen an der Bandoberseite befestigt.

Die Befestigung des Bandendes an dem Sockel stellt einen zusätzlichen Montageschritt dar. Außerdem kann das Band nicht oder nur umständlich gegen ein anderes ausgetauscht werden. Für manche Anwendungen ist jedoch wünschenswert kürzere oder längere Bänder einzusetzen oder auch ein beschädigtes Band durch ein neues Band ersetzen zu können. Bei dem bekannten Befestigungssystem ist dies nur durch Austausch auch des Sockels oder das Lösen von Schrauben möglich. Das bekannte System erfordert außerdem die Verwendung eines Bandes, das auf derselben Seite einen Abschnitt mit Haken und einen Flanschabschnitt aufweist. Die Haltekraft solcher Bänder ist relativ gering.

Weitere Befestigungssysteme mit Bändern zur Befestigung von länglichen Gegenständen an einem Sockel oder Montageelement sind aus der JP 2006 064021 A, JP 2003 134648 A und der EP 2 112 413 A1 bekannt. Bei diesen Systemen wird das Band um den zu fixierenden Gegenstand und ein Element des Sockels gelegt und durch Verbinden der Enden des Bandes klemmend zusammen mit dem Gegenstand am Sockel gehalten. Eine Verbindung des Bandes mit dem Sockel ohne zu fixierendem Gegenstand ist nicht vorgesehen.

Der vorliegenden Erfindung liegt die Aufgabe zugrunde, ein Befestigungssystem für längliche Gegenstände bereit zustellen, das preiswert in der Herstellung ist und bei dem das Klettverschlussband leicht lösbar am Sockel befestigt und damit einfach austauschbar ist.

Die Aufgabe wird gelöst durch ein Befestigungssystem zur lösbaren Befestigung von Kabeln, Rohren oder anderen länglichen Gegenständen an einem Untergrund oder einem Bauteil mit einem an dem Untergrund oder Bauteil befestigbaren Sockel, der mit einer Auflage für den mindestens einen Gegenstand versehen ist, und mit einem an dem Sockel lösbar befestigbaren und um den oder die auf der Auflage aufliegenden Gegenstände schlingbaren Klettverschlussband, das dadurch gekennzeichnet ist, dass der Sockel mindestens eine Aufnahme für ein Ende des Klettverschlussbandes aufweist, die mit einer Verzahnung versehen ist, in der sich die Flauschseite des Klettverschlussbandes bei Zug auf das Klettband verhakt, und dass der Sockel einen unterhalb der mindestens einen Aufnahme verlaufenden Durchgangskanal für das Klettverschlussband aufweist, durch den das Klettverschlussband mit seinem zweiten Ende hindurchführbar ist.

Bei dem erfindungsgemäßen Befestigungssystem wird ein Klettverschlussbandende mit Hilfe der Verzahnung leicht wieder lösbar an dem Sockel fixiert. Es können daher handelsübliche Klettverschlussbänder unterschiedlicher Länge für das Befestigungssystem eingesetzt werden. Das Befestigungssystem lässt sich daher optimal an die jeweilige Aufgabe anpassen. Ein verschlissenes Band kann jederzeit ausgetauscht werden. Bei der Herstellung des Befestigungssystems kann auf den Befestigungsschritt des Bandes verzichtet werden.

Außerdem wird das zweite Ende des Bandes nicht durch Umschlagen an der Bandoberseite fixiert sondern durch Hindurchführen durch den Durchgangskanal und Anpressen an die Bandoberseite auf der gleichen Seite des Sockels, an der auch das erste Bandende befestigt ist. Dadurch kann der Sockel schmaler gebaut werden als bei der Lösung nach der EP 1 646 818 B1.

Der Platzbedarf des Sockels lässt sich weiter optimieren, wenn die Aufnahme für das erste Bandende im Bereich der Auflage für die Gegenstände angeordnet ist. Die Breite des Sockels kann dadurch auf die Breite der Auflage für die Gegenstände beschränkt werden.

Bei einer bevorzugten Ausführungsform ist die mindestens eine Aufnahme einseitig mit einer Verzahnung versehen. Dies erleichtert das Einführen des Bandendes in die Aufnahme.

Weitere Vorteile ergeben sich, wenn die mindestens eine Aufnahme eine auf der Außenseite des Sockels liegende Einfuhröffnung für das Klettverschlussbandende und zur Auflage für den oder die Gegenstände hin eine zweite Öffnung für das Klettverschlussbandende aufweist, wobei die zweite Öffnung mit einer Verzahnung versehen ist. Bei dieser Gestaltung der Aufnahme lässt sich die Verzahnung fertigungstechnisch sehr einfach anbringen. Außerdem ist das Einführen und Fixieren des ersten Endes des Klettverschlussbandes in dieser Aufnahme sehr komfortabel.

Es können außerdem auch zwei, jeweils an gegenüberliegenden Seiten des Sockels angeordnete Aufnahmen für das erste Ende des Klettverschlussbandes vorgesehen sein. Das Klettverschlussband lässt sich dann in beiden Umschlingungsrichtungen um die Gegenstände legen. Je nach den Platzverhältnissen kann dies ein großer Vorteil für die Handhabung des Befestigungssystems sein. Außerdem lässt sich bei dieser Ausgestaltung der Sockel vollkommen symmetrisch aufbauen.

Weiter ist es insbesondere im Hinblick auf den Platzbedarf von Vorteil, wenn die mindestens eine Aufnahme und der Durchgangskanal parallel zueinander angeordnet sind. Der Sockel kann dadurch nicht nur schmal sondern auch relativ flach gebaut werden, da der erforderliche Raum für die Aufnahme oder die Aufnahmen und den Durchgangskanal unterhalb der Auflage für die Gegenstände bei dieser Ausgestaltung sehr gering ist.

Das Klettverschlussband kann vorteilhafterweise über seine gesamte Länge eine Flauschseite und eine mit Haken versehene Seite aufweisen. Dadurch können mit demselben Band Gegenstände unterschiedlicher Durchmesser oder Bündel von Gegenständen unterschiedlicher Durchmesser gespannt und fixiert werden.

Das Befestigungssystem ist insbesondere zur Fixierung von Kabeln oder Rohren oder von Bündeln davon gedacht. Eine solche Fixierung kann beispielsweise an einer Wand, einem Maschinengehäuse oder einem Schaltschrank erfolgen. Bei einer ersten Variante kann daher der Sockel mit einem Untergrund oder Bauteil verschraubbar sein.

Der Sockel kann jedoch auch derart gestaltet sein, dass er mittels eines Nutensteins an einer Profilschiene befestigbar ist. Solche Profilschienen, insbesondere C-Schienen, sind häufig in Schaltschränken angeordnet. Zur Fixierung von Kabeln oder Rohren in Schaltschränken ist daher diese Ausgestaltung des Sockels besonders vorteilhaft.

Dabei kann der Nutenstein Anschlagsflächen aufweisen, die an Rändern der Nutöffnung einer Nut der Profilschiene nach dem Einsetzen und Verdrehen des Nutensteins in der Nut anliegen. Dies verhindert ein Überdrehen des Nutensteins und damit ein unbeabsichtigtes Wiederlösen des Sockels von der Profilschiene.

Die Sicherheit der Befestigung des Sockels kann weiter dadurch erhöht werden, dass der Nutenstein mit einem Rastvorsprung versehen ist, der nach dem Einsetzen und Verdrehen in einer Nut in die Nutöffnung ragt und ein unbeabsichtigtes Lösen des Nutensteins verhindert. Diese Rastverbindung kann wieder lösbar sein, beispielsweise indem der Rastvorsprung mittels eines Werkzeugs oder von Hand wieder zurück gedrückt wird.

Nachfolgend werden bevorzugte Ausführungsbeispiele erfindungsgemäßer Befestigungssysteme mit Bezug auf die Zeichnung näher beschrieben.

Es zeigen:
- Fig. 1: eine perspektivische Ansicht eines Sockels eines ersten Befestigungssystems;
- Fig. 2: einen vergrößerten Längsschnitt durch den Sockel aus Fig. 1;
- Fig. 3: eine vergrößerte Draufsicht auf den Sockel aus Fig. 1;
- Fig. 4: einen Schnitt durch ein Befestigungssystem mit dem Sockel aus Fig. 1 und einem damit gespannten Rohr;
- Fig. 5: eine perspektivische Ansicht eines Sockels eines zweiten Befestigungssystems;
- Fig. 6: eine Detailansicht eines Nutensteins des Sockels aus Fig. 5;
- Fig. 7: einen Längsschnitt durch einen Sockel eines dritten Befestigungssystems.

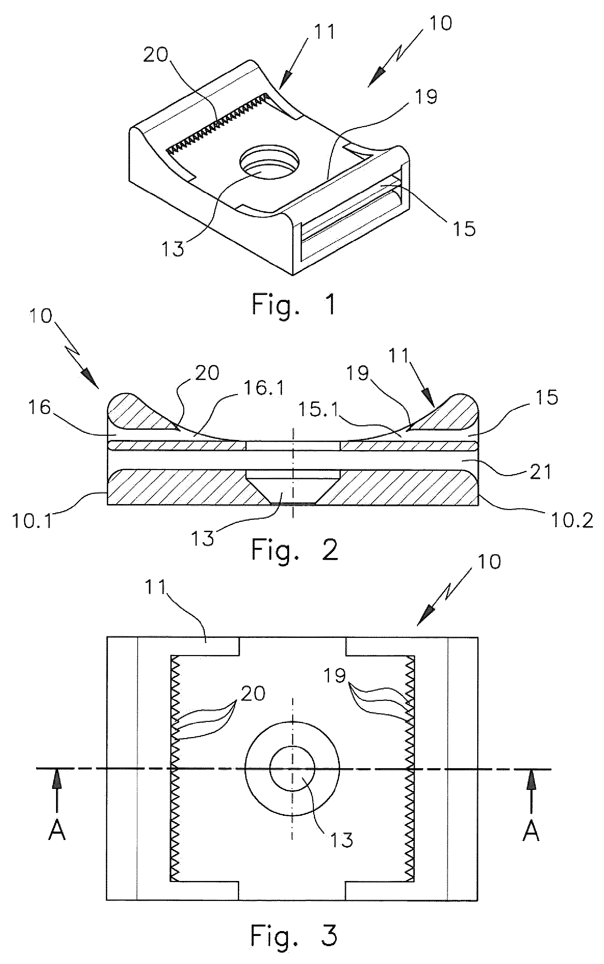

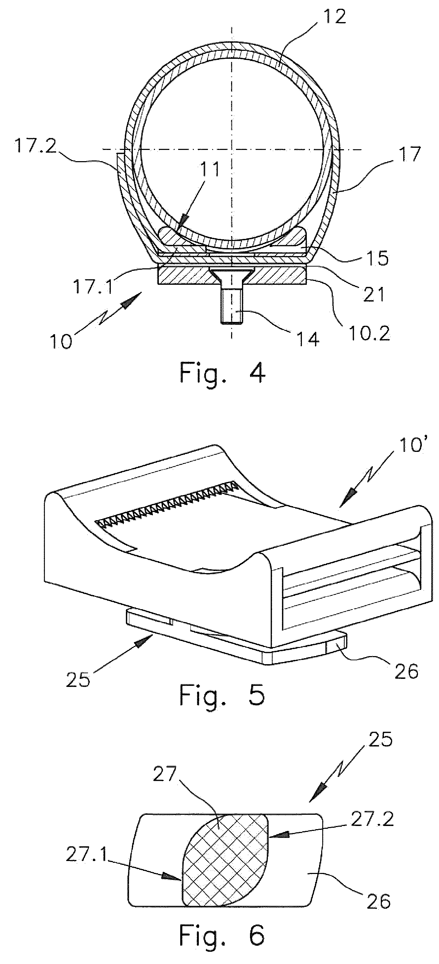

Der in Fig. 1 dargestellte Sockel 10 weist an seiner Oberseite eine gewölbte Auflage 11 für ein Rohr 12 (Fig. 4) oder andere längliche Gegenstände wie Kabel oder Schläuche auf. Zur Befestigung an einem Untergrund oder Bauteil ist der Sockel 10 mit einer zentralen Bohrung 13 für eine Schraube 14 (Fig. 4) versehen. Weiter weist der Sockel 10 zwei Aufnahmen 15 und 16 (Fig. 2) auf, in die alternativ ein erstes Ende 17.1 eines Klettverschlussbandes 17 (Fig. 4) eingeführt werden kann.

Wie insbesondere der Längsschnitt aus Fig. 2 verdeutlicht, sind die Aufnahmen 15 und 16 als horizontale Schlitze ausgebildet, die sich von den Seiten 10.1 und 10.2 des Sockels 10 bis zur Auflage 11 erstrecken. An der Oberseite der Öffnungen 15.1 und 16.1 der Aufnahmen 15 und 16 im Bereich der Auflage 11 sind Verzahnungen 19, 20 vorgesehen, in denen sich die Flauschseite des Klettverschlussbandendes 17.1 bei Zug auf das Band 17 verhaken kann und die besonders deutlich in der Draufsicht der Fig. 3 zu sehen sind.

Fig. 2 zeigt außerdem einen parallel und unterhalb der Aufnahmen 15, 16 angeordneten Durchgangskanal 21, durch den das Klettverschlussband 17 hindurchgeführt werden kann, wie nachfolgend anhand der Fig. 4 beschrieben wird, welche die Funktionsweise des gesamten Befestigungssystems bestehend aus Sockel 10 und Klettverschlussband 17 verdeutlicht.

Zum Spannen eines Rohres 12 oder eines anderen längliche Gegenstandes wird zunächst das erste Ende 17.1 des Klettverschlussbandes 17 in eine der Aufnahmen 15 oder 16, hier die Aufnahme 16, eingeführt. Anschließend wird das Rohr 12 auf die Auflage 11 des Sockels 10 aufgelegt. Danach wird das Klettverschlussband 17 über das Rohr gelegt und auf der der Aufnahme 16 gegenüberliegenden Seite 10.2 des Sockels 10 in den Durchgangskanal 21 ein- und durch diesen hindurchgeführt. Abschließend wird das zweite Ende 17.2 des Klettverschlussbandes auf die Oberfläche des um das Rohr 12 geführten Klettverschlussbandes 17 gepresst, wobei die Haken- und die Flauschseite des Bandes 17 aufeinander zu liegen kommen und das Band 17 dadurch fixiert wird. Zum Lösen der Befestigung des Rohres 12 wird das Klettverschlussbandende 17.2 angehoben, das Band 17 aus dem Kanal 21 herausgezogen, das Rohr 12 von der Auflage 11 entfernt und anschließend das gesamte Klettverschlussband 17 durch die Öffnung 16.1 (Fig. 2) der Aufnahme 16 herausgeschoben.

Es versteht sich, dass das Klettverschlussband 17 in gleicher Weise auch in der Aufnahme 15 fixiert und dann gegen den Uhrzeigersinn um das Rohr 12 gelegt und von der Seite 10.1 des Sockels 10 her durch den Durchgangskanal 21 geführt werden kann, um das Rohr auf dem Sockel 10 festzuspannen.

Die Fig. 5 und 6 verdeutlichen eine alternative Ausgestaltung des Sockels 10'. Anstelle der zentralen Bohrung 13 weist der Sockel 10' einen Nutenstein 25 zur Fixierung an eine Profilschiene, insbesondere einer C-Schiene auf. Ansonsten ist der Sockel 10' identisch zum Sockel 10 aufgebaut.

Wie Fig. 6 verdeutlicht, weist der Nutenstein 25 einen äußeren und längeren Abschnitt 26 auf, der nach dem Einsetzen in eine Schiene die Hinterschneidungen der Nutöffnung untergreift. Der Abschnitt 26 ist über einen kürzeren Abschnitt 27 mit dem Boden des Sockels 10' verbunden. Dieser Abschnitt 27 weist zwei Anschlagflächen 27.1 und 27. 2 auf, die nach dem Einsetzen und Eindrehen des Nutensteins 25 in die Nut einer Schiene an den Rändern der Nutöffnung anliegen und ein Überdrehen des Nutensteins 25 verhindern. Der Nutenstein 25 kann außerdem mit einem hier nicht näher dargestellten Rastvorsprung versehen sein, der auch ein Zurückdrehen des Nutensteins und damit ein unbeabsichtigtes Lösen des Nutensteins 25 aus der Nut verhindert.

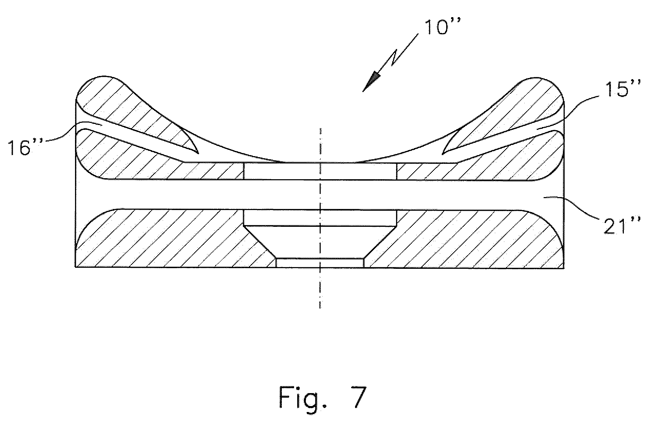

Bei dem in Fig. 7 gezeigten Sockel 10" eines dritten Befestigungssystems sind die Aufnahmen 15" und 16" nicht mehr parallel zum Durchgangskanal 21" angeordnet, sondern von außen nach innen schräg verlaufend. Diese Anordnung erleichtert das Einführen der Klettbandenden.

## Patentansprüche

1. Befestigungssystem zur lösbaren Befestigung von Kabeln, Rohren oder anderen länglichen Gegenständen (12) an einem Untergrund oder einem Bauteil mit einem an dem Untergrund oder Bauteil befestigbaren Sockel (10, 10', 10"), der mit einer Auflage (11) für den mindestens einen Gegenstand (12) versehen ist, und mit einem an dem Sockel (10, 10', 10") lösbar befestigbaren und um den oder die auf der Auflage (11) aufliegenden Gegenstände (12) schlingbaren Klettverschlussband (17), **dadurch gekennzeichnet, dass** der Sockel (10, 10', 10") mindestens eine Aufnahme (15, 16; 15", 16") für ein Ende (17.1) des Klettverschlussbandes (17) aufweist, die mit einer Verzahnung (19, 20) versehen ist, in der sich die Flauschseite des Klettverschlussbandes (17) bei Zug auf das Klettband (17) verhakt, und dass der Sockel (10, 10', 10") einen unterhalb der mindestens einen Aufnahme (15, 16; 15', 16') verlaufenden Durchgangskanal (21, 21") für das Klettverschlussband (17) aufweist, durch den das Klettverschlussband (17) mit seinem zweiten Ende (17.2) hindurchführbar ist.

2. Befestigungssystem nach Anspruch 1, **dadurch gekennzeichnet, dass** die mindestens eine Aufnahme (15, 16; 15", 16") im Bereich der Auflage (11) angeordnet ist.

3. Befestigungssystem nach Anspruch 1 oder 2, **dadurch gekennzeichnet, dass** die mindestens eine Aufnahme (15, 16; 15", 16") einseitig mit einer Verzahnung (19, 20) versehen ist.

4. Befestigungssystem nach einem der vorhergehenden Ansprüche, **dadurch gekennzeichnet, dass** die mindestens eine Aufnahme (15, 16: 15", 16") eine auf der Außenseite des Sockels (10, 10', 10") liegende Einfuhröffnung für das Klettverschlussbandende (17.1) und zur Auflage (11) für den mindestens einen Gegenstand hin eine zweite Öffnung für das Klettverschlussbandende (17.1) aufweist, wobei die zweite Öffnung mit einer Verzahnung (19, 20) versehen ist.

5. Befestigungssystem nach einem der vorhergehenden Ansprüche, **dadurch gekennzeichnet, dass** zwei, jeweils an gegenüberliegenden Seiten des Sockels (10, 10', 10") angeordnete Aufnahmen (15, 16; 15", 16") für das erste Ende (17.1) des Klettverschlussbandes (17) vorgesehen sind.

6. Befestigungssystem nach einem der vorhergehenden Ansprüche, **dadurch gekennzeichnet, dass** die mindestens eine Aufnahme (15, 16) und der Durchgangskanal (21) parallel zueinander angeordnet sind.

7. Befestigungssystem nach einem der vorhergehenden Ansprüche, **dadurch gekennzeichnet, dass** das Klettverschlussband (17) über seine gesamte Länge eine Flauschseite und eine mit Haken versehene Seite aufweist.

8. Befestigungssystem nach einem der vorhergehenden Ansprüche, **dadurch gekennzeichnet, dass** der Sockel (10, 10', 10") mit einem Untergrund oder Bauteil verschraubbar ist.

9. Befestigungssystem nach einem der Ansprüche 1 bis 7, **dadurch gekennzeichnet, dass** der Sockel (10') mittels eines Nutensteins (25) an einer Profilschiene befestigbar ist.

10. Befestigungssystem nach Anspruch 9, **dadurch gekennzeichnet, dass** der Nutenstein (25) Anschlagsflächen (27.1, 27.2) aufweist, die an den Rändern der Nutöffnung einer Nut der Profilschiene nach dem Einsetzen und Verdrehen des Nutensteins (25) in der Nut anliegen.

11. Befestigungssystem nach Anspruch 9 oder 10, **dadurch gekennzeichnet, dass** der Nutenstein (25) mit einem Rastvorsprung versehen ist, der nach dem Einsetzen und Verdrehen in einer Nut in die Nutöffnung ragt und ein unbeabsichtigtes Lösen des Nutensteins (25) verhindert.

## Claims

1. A fastening system for the releasable fastening of cables, pipes or other elongate objects (12) to a substrate or structural component, said fastening system comprising: a base (10, 10', 10") which can be fixed to the substrate or structural component and which is provided with a support (11) for the at least one object (12); and a hook-and-pile fastening strip (17) which can be releasably attached to the base (10, 10', 10") and can be looped around the object or objects (12) resting on the support (11), **characterized in that** the base (10, 10', 10") has at least one slot (15, 16; 15", 16") for one end (17.1) of the hook-and-pile fastening strip (17), said slot being provided with serrations (19, 20) in which the pile side of the hook-and-pile fastening strip (17) catches when the hook-and-pile fastening strip is pulled, and **in that** the base (10, 10', 10") has a through channel (21, 21 ") for the hook-and-pile fastening strip (17), said through channel (21, 21 ") extending underneath the at least one slot (15, 16; 15", 16") and the second end (17.2) of the hook-and-pile fastening strip (17) being guided through said through channel (21, 21").

2. A fastening system according to Claim 1, **characterized in that** the at least one slot (15, 16; 15", 16") is disposed in the region of the support (11).

3. A fastening system according to Claim 1 or 2, **characterized in that** the at least one slot (15, 16; 15", 16") is provided on one side with serrations (19, 20).

4. A fastening system according to one of the preceding claims, **characterized in that** the at least one slot (15, 16; 15", 16") has one opening provided on the outside of the base (10, 10', 10") for insertion of the end (17.1) of the hook-and-pile fastening strip, and, towards the support (11) for the at least one object, it has a second opening for the end (17.1) of the hook-and-pile fastening strip, said second opening being provided with serrations (19, 20).

5. A fastening system according to one of the preceding claims, **characterized in that** two slots (15, 16; 15", 16") are provided, in each case located on opposite sides of the base (10, 10', 10"), for the first end (17.1) of the hook-and-pile fastening strip (17).

6. A fastening system according to one of the preceding claims, **characterized in that** the at least one slot (15, 16) and the through channel (21) are disposed parallel to one another.

7. A fastening system according to one of the preceding claims, **characterized in that** the hook-and-pile fastening strip (17) has, over its entire length, a pile side and a side provided with hooks.

8. A fastening system according to one of the preceding claims, **characterized in that** the base (10, 10', 10") can be screwed to a substrate or structural component.

9. A fastening system according to one of Claims 1 to 7, **characterized in that** the base (10') can be fixed to a profile rail by means of a sliding block (25).

10. A fastening system according to Claim 9, **characterized in that** the sliding block (25) has stop faces (27.1, 27.2) which rest against the edges of the opening of a slot in the profile rail after the sliding block (25) has been inserted and twisted in the slot.

11. A fastening system according to Claim 9 or 10, **characterized in that** the sliding block (25) is provided with a snap-in projection which, after the sliding block has been inserted and twisted in a slot, extends into the slot opening and prevents unintentional release of the sliding block (25).

## Revendications

1. Système de fixation pour la fixation détachable de câbles, de tubes ou d'autres objets allongés (12) sur un fond ou sur un composant structurel avec un socle (10, 10', 10") susceptible d'être fixé sur le fond ou sur le composant structurel, socle qui est pourvu d'un appui (11) pour ledit au moins un objet (12), et comprenant une bande à fermeture agrippante (17) susceptible d'être fixée de façon détachable sur le socle (10, 10', 10") et d'être appliquée autour de l'objet ou des objets (12) reposant sur l'appui (11),
**caractérisé en ce que** le socle (10, 10', 10") comprend au moins une réception (15, 16 ; 15", 16") pour une extrémité (17.1) de la bande à fermeture agrippante (17), réception qui est pourvue d'une denture (19, 20) qui vient s'accrocher dans le côté feutre de la bande à fermeture agrippante (17) sous une traction sur la bande agrippante (17), et **en ce que** le socle (10, 10', 10") comprend un canal traversant (21, 21"), s'étendant au-dessous de ladite au moins une réception (15, 16 ; 15", 16'), pour la bande à fermeture agrippante (17), canal à travers lequel peut être passée la bande à fermeture agrippante (17) avec sa seconde extrémité (17.2).

2. Système de fixation selon la revendication 1, **caractérisé en ce que** ladite au moins une réception (15, 16 ; 15", 16") est agencée dans la région de l'appui (11).

3. Système de fixation selon la revendication 1 ou 2, **caractérisé en ce que** ladite au moins une réception (15, 16 ; 15", 16") est dotée d'une denture (19, 20) sur un côté.

4. Système de fixation selon l'une des revendications précédentes, **caractérisé en ce que** ladite au moins une réception (15, 16 ; 15", 16") comporte une ouverture d'introduction, située sur le côté extérieur du socle (10, 10', 10"), pour l'extrémité de la bande à fermeture agrippante (17.1), et une seconde ouverture, orientée vers l'appui (11) pour ledit au moins un objet, pour l'extrémité de la bande à fermeture agrippante (17.1), dans lequel la seconde ouverture est dotée d'une denture (19, 20).

5. Système de fixation selon l'une des revendications précédentes, **caractérisé en ce qu'**il est prévu deux réceptions (15, 16 ; 15", 16"), agencées respectivement sur des côtés opposés du socle (10, 10', 10"), pour la première extrémité (17.1) de la bande à fermeture agrippante (17).

6. Système de fixation selon l'une des revendications précédentes, **caractérisé en ce que** ladite au moins une réception (15, 16) et le canal traversant (21) sont agencés parallèlement l'un à l'autre.

7. Système de fixation selon l'une des revendications précédentes, **caractérisé en ce que** la bande à fermeture agrippante (17) comprend sur la totalité de sa longueur un côté feutre et un côté doté de crochets.

8. Système de fixation selon l'une des revendications précédentes, **caractérisé en ce que** le socle (10, 10', 10") est susceptible d'être vissé sur un fond ou sur un composant structurel.

9. Système de fixation selon l'une des revendications 1 à 7, **caractérisé en ce que** le socle (10') est susceptible d'être fixé sur un rail profilé au moyen d'un bloc à rainures (25).

10. Système de fixation selon la revendication 9, **caractérisé en ce que** le bloc à rainures (25) comporte des surfaces de butée (27.1, 27.2), qui s'appliquent contre les bordures de l'ouverture d'une gorge du rail profilé après mise en place et rotation du bloc à rainures (25) dans la gorge.

11. Système de fixation selon la revendication 9 ou 10, **caractérisé en ce que** le bloc à rainures (25) est doté d'une saillie d'enclenchement qui, après mise en place et rotation dans une gorge, pénètre dans l'ouverture de la gorge et empêche un détachement inopiné du bloc à rainures (25).
